# FASCICULE DE BREVET EUROPEEN

(11) **EP 0 884 293 B1**
(45) Date de publication et mention de la délivrance du brevet: **05.01.2005**
(21) Numéro de dépôt: 98401411.8
(22) Date de dépôt: 11.06.1998
(51) Int. Cl.: C05F 11/10, C05D 3/00, C05G 1/00

(54) **Compositions fertilisantes à base de dérivés naturels ou synthétiques d'aminopurine ou d'extraits d'algues riches en de tels dérivés en association avec une source de calcium**
Düngemittelzusammensetzungen enthaltend natürliche oder synthetische Aminopurinderivate oder Algenextrakte, die diese Produkte enthalten zusammen mit einer Kalziumquelle
Fertiliser compositions containing natural or synthetic aminopurine derivatives or seaweed extracts containing these products together with a calcium source

(30) Priorité: 11.06.1997 FR 9707222
(43) Date de publication de la demande: 16.12.1998
(73) Titulaire: SECMA BIOTECHNOLOGIES MARINES, 22260 Pontrieux (FR)
(72) Inventeur: Briand, Xavier, 22740 Lezardrieux (FR)
(74) Mandataire: Hubert, Philippe

(56) Documents cités:
- EP-A- 0 236 988
- EP-A- 0 538 091
- WO-A-90/02719
- BE-A- 884 749
- US-A- 4 581 056
- DATABASE WPI Section Ch, Week 7536 Derwent Publications Ltd., London, GB; Class C03, AN 75-59554W XP002055358 & JP 50 051 983 A (SHINKO SANG) , 9 mai 1975
- DATABASE WPI Section Ch, Week 8801 Derwent Publications Ltd., London, GB; Class C03, AN 88-002663 XP002055359 & JP 62 265 208 A (SHINKYO SANGYO KK) , 18 novembre 1987
- CHEMICAL ABSTRACTS, vol. 102, no. 7, 18 février 1985 Columbus, Ohio, US; abstract no. 61443t, C. LAUDAT ET AL: "Activity of an agricultural fertilizer prepared from LithothamniumCalcareum" page 534; XP002056585 & C. LAUDAT ET AL: "Activity of an agricultural fertilizer prepared form Lithothamnium Calcareum" C.R.SEANCES SOC. BIOL. SES. FIL., vol. 178, no. 4, pages 355-360,

## Description

La présente invention qui trouve application dans le domaine agricole a essentiellement pour objet une nouvelle utilisation de compositions à base de dérivés naturels ou synthétiques d'aminopurine ou d'extraits d'algues riches en de tels dérivés en association avec une source de calcium.

Dans le cadre de la présente description, on entend désigner par l'expression «composition fertilisante » tout produit dont l'emploi est destiné à assurer ou à améliorer les propriétés physiques, chimiques et biologiques des sols ainsi que la nutrition des végétaux.

Une telle composition peut être par exemple un amendement ou un engrais.

On sait que les amendements calciques contiennent du calcium généralement sous forme d'oxydes, d'hydroxydes ou de carbonates dont le rôle est de maintenir ou d'élever le pH du sol afin d'en améliorer les propriétés. Dans ce domaine, les algues corallifères du genre *Lithothamnium* sont traditionnellement utilisées en agriculture du fait notamment de leur richesse en carbonates de calcium.

On sait par ailleurs que les engrais se définissent comme des matières fertilisantes dont la fonction principale est d'apporter aux plantes des éléments directement utiles à leur nutrition (éléments fertilisants majeurs, éléments fertilisants secondaires et oligo-éléments).

A cet effet, les engrais foliaires utilisent généralement des sources d'azote, de phosphore et de potassium ainsi que des oligo-éléments et des acides aminés.

On sait encore que les algues, en raison de leurs propriétés variées ont été proposées pour de nombreuses applications dans le domaine agricole. En particulier des extraits liquides d'algues brunes ont été proposées en application foliaire pour leur action biostimulante.

On sait enfin que les cytokinines sont des substances naturelles ou synthétiques qui stimulent la cytokinèse, c'est-à-dire la division cellulaire. Ces substances sont présentes dans tous les tissus végétaux. On connaît aujourd'hui une centaine de composés cytokiniques de synthèse dérivés d'aminopurine, de pyridine, de pyrimidine et d'imidazole. De telles substances ont été préconisées dans le domaine agricole, mais généralement pour des cultures spécialisées comme par exemple la vigne et en application foliaire.

L'utilisation des matières fertilisantes au sol reste aujourd'hui très restrictive, son action étant limitée au niveau de l'amélioration de la qualité des sols ou de la nutrition de la plante.

C'est dans ce contexte qu'il a été découvert, et ceci constitue le fondement de la présente invention, que l'utilisation de compositions associant au moins un dérivé naturel ou synthétique d'aminopurine ou un extrait d'algues riche en de tels dérivés et une source de calcium, apportées de façon hexogène, de préférence au niveau du sol, permet de façon tout à fait inattendue et surprenante de stimuler le processus de la germination et de la mise en place des structures végétales de production.

Il semble, sans que ceci constitue une interprétation théorique, que cette stimulation passe d'abord par la fixation des dérivés d'aminopurine agissant comme signal sur les récepteurs de la plante, et que, dans un deuxième temps, le calcium agisse comme messager en activant et en régulant notamment les différents systèmes enzymatiques et protéiques à l'origine de la réponse physiologique.

Il a en particulier été montré de façon surprenante que les compositions, dont l'utilisation est revendiquée selon l'invention, permettent de favoriser, au moment de la germination, l'implantation de la culture en améliorant le taux de germination, la précocité, l'homogénéité des peuplements et la vigueur des plantules.

Ces compositions permettent en outre de lutter contre les conditions sous-optimales de germination (manque de lumière, températures trop basses, ...) ou les problèmes d'adversité du milieu de germination lui-même. Ainsi, les compositions, dont l'utilisation est revendiquée selon l'invention, permettent de garantir le succès de l'implantation qui constitue un préalable indispensable à la croissance équilibrée de la culture et à l'obtention de plantes fertiles exprimant au mieux leurs potentialités agronomiques.

Il a également été montré, d'une façon tout à fait inattendue, que les compositions, dont l'utilisation est revendiquée selon l'invention, favorisent la mise en place des structures végétales de production par stimulation des processus de régulation ou de différenciation .

Ainsi, ces compositions permettent d'accompagner les cultures au cours de leur développement et jouent un rôle déterminant dans l'élaboration du rendement.

En particulier, ces compositions permettent à certaines cultures, comme par exemple les céréales ou les pâtures, d'exprimer leur capacité naturelle à compenser les effets défavorables de l'environnement (conditions climatiques ou état défavorable du sol); le tallage et le nombre d'épis étant autant de facteurs d'ajustement aux conditions environnantes.

Par ailleurs, en favorisant l'implantation de la culture, la mise en place des structures végétales de production, et la différenciation florale, ces compositions jouent un rôle déterminant dans l'élaboration du rendement vis-à-vis d'autres cultures comme le maïs qui n'ont pas cette capacité de compensation, et dont la culture en conditions limites réduit leur potentiel de développement.

Dans ces conditions, la présente invention a pour objet l'utilisation par voie exogène d'une association constituée d'au moins un dérivé naturel ou synthétique d'aminopurine ou d'un extrait d'algues riche en de tels dérivés, et d'une source de calcium, comme agent destiné à stimuler le processus de la germination et de la mise en place des structures végétales de production.

Les dérivés d'aminopurine susceptibles d'être utilisés dans le cadre de la présente invention peuvent être naturels ou synthétiques ou présents au sein d'extraits d'algues enrichis en de tels dérivés.

A titre d'exemple de dérivés naturels d'aminopurine susceptibles d'être utilisés dans le cadre de la présente invention, on citera notamment la 6-(4 hydroxy-3-méthylbutyl-2-ényl) aminopurine, la 6-(4-hydroxy-3-méthylbutyl) aminopurine et la 6-(diméthylallyl) aminopurine.

A titre d'exemple de dérivés synthétiques d'aminopurine susceptibles d'être utilisés dans le cadre de la présente invention, on citera notamment la 6-(diméthylallyl) aminopurine de synthèse, la kinétine et la 6-benzylamino-purine.

Des extraits d'algues enrichis en dérivés d'aminopurine utiles dans le cadre de la présente invention peuvent être obtenus à partir de certaines espèces d'algues par un procédé comportant généralement les étapes suivantes: lavage, broyage, extraction (séparation solide-liquide), et éventuellement concentration.

Les conditions d'extraction et la nature des algues seront choisies de telle façon que l'extrait obtenu présente l'activité souhaitée, par comparaison à des substances pures de référence.

Ces choix pourront donc être facilement réalisés par l'homme de métier notamment en tenant compte des indications générales suivantes.

Les algues présentant une activité significative, par comparaison à des substances pures, sont de préférence des algues brunes choisies parmi *Halydris siliquosa, Ascophyllum nodosum, Fucus vesiculosus, Fucus serratus.*

Les meilleurs résultats ont été obtenus à partir de *Halydris siliquosa.*

On a de même déterminé que pour enrichir au mieux l'extrait d'algue en dérivé d'aminopurine actif, il convient de réaliser l'extraction en milieu aqueux acide. Les meilleurs résultats ont été obtenus en opérant une extraction à une température d'environ 90 à 110° C pendant 30 mn à 1 h sous agitation, poursuivie à température ambiante pendant une période d'environ 24 à 48 h.

L'extrait obtenu peut être plus ou moins concentré selon l'utilisation envisagée. Une déshydratation totale de cet extrait permettant une présentation sous forme pulvérulente peut être obtenue, par exemple, par atomisation.

Selon une caractéristique particulière de l'invention, les dérivés d'aminopurine précités ou les extraits d'algues enrichis en de tels dérivés sont utilisés en une quantité permettant l'obtention d'une activité comprise entre 500 et 5 000 exprimée en microgrammes équivalents BAP (6-benzylaminopurine) mesurée par le test Amaranthe.

Ce test qui a été décrit par Biddington et Thomas (Biddington N.I. and Thomas T.H. 1973 *Planta* : 111 183-186) est fondé sur la capacité des dérivés d'aminopurine à induire la synthèse d'amaranthine (pigment rouge) chez la plante *Amaranthus candatus*.

L'activité des produits testés est ainsi mesurée par la quantité d'amaranthine synthétisée exprimée par la différence de densité optique entre l'échantillon de plante non traitée et l'échantillon de plante traitée.

L'activité est exprimée par comparaison à l'activité d'un dérivé de synthèse connu la 6-benzylaminopurine (désignée ci-après BAP).

Les sources de calcium susceptibles d'être utilisées dans le cadre de la présente invention peuvent être d'origine minérale, synthétique, animale ou algale.

A titre d'exemples préférés de source de calcium susceptibles d'être utilisées dans le cadre de la présente invention, on citera notamment l'algue corallifère du genre *Lithothamnium*, les craies, le trez, la marne, la dolomie, les chaux, les écumes de sucrerie, les boues de calcification des eaux de forage, les scories thomas, les phosphates naturels, la cyanamide calcique, le chlorure de calcium et les sels de calcium d'acides aminés.

Les meilleurs résultats ont été obtenus avec l'algue *Lithothamnium* (sous forme pulvérulente) en raison de ses caractéristiques particulières et remarquables liées à sa richesse en oligo-éléments, à sa porosité élevée et à sa surface spécifique élevée, qui permettent une fixation et une association intime avec les dérivés d'aminopurine.

L'utilisation conforme à la présente invention trouve application dans la culture d'une très grande variété de plantes.

Parmi celles-ci, on citera en particulier :
- Les plantes de grande culture telles que les céréales (blé, maïs) ;
- Les protéagineux (pois) ;
- Les oléagineux (soja, tournesol) ;
- Les plantes prairiales telles qu'en particulier « ray-grass » utiles pour l'alimentation animale.
- Les cultures spécialisées telles qu'en particulier le maraîchage (laitue, tomate, melon) ou l'arboriculture (poire, pomme, nectarine).

La présente invention sera maintenant illustrée par les exemples non-limitatifs suivants. Dans ces exemples, et sauf indication contraire, les pourcentages sont exprimés en poids et la température est la température ambiante.

### Exemple 1

### Procédé de préparation d'un extrait d'algue enrichi en dérivés d'aminopurine actifs utilisables dans le cadre de l'invention.

### A/ Optimisation des paramètres d'extraction.

Une étude préalable a été réalisée afin d'optimiser les paramètres d'extraction des dérivés d'aminopurine utilisables dans le cadre de la présente invention.

On a en particulier recherché l'influence du pH, de la durée et de la température d'extraction pour obtenir, pour une espèce d'algues donnée, l'activité maximale exprimée en microgrammes équivalent B.A.P. par gramme de matière sèche.

Cette étude préalable a permis de montrer que les algues brunes conviennent plus particulièrement dans le cadre de la présente invention, et notamment les algues *Halydris siliquosa, Ascophyllum nodosum, Fucus vesiculosus* et *Fucus serratus.*

Dans le cas de la variété *Halydris siliquosa* qui a conduit aux meilleurs résultats en terme d'activité, l'extraction est réalisée de façon optimale par hydrolyse acide à environ 100° C pendant 60 minutes suivi d'une extraction pendant 24 heures à 15 °C.

### B/ Exemple détaillé d'extraction :

Un extrait d'*Halydris siliquosa* enrichi en 6-(4-hydroxy-3-méthylbutyl-2-ényl) aminopurine a été obtenu en suivant le protocole expérimental suivant.

### a) Lavage

Des algues fraîches de type *Halydris siliquosa* sont soumises à deux lavages successifs dans un bac d'eau afin d'éliminer le sable et les graviers.

Les algues sont ensuite déposées dans des paniers grillagés en inox avant d'être introduites dans les bacs où elles sont recouvertes d'eau.

Une agitation par des buses d'aération permet de maintenir les algues en suspension en favorisant ainsi la décantation des impuretés.

### b) Broyage

Les algues ainsi lavées sont égouttées puis broyées en morceaux de 1 à 10 mm.

### c) Extraction

200 kg d'algues sont dispersés dans 800 kg d'eau portée à ébullition dans un réacteur chauffant.

Le pH est ajusté à la valeur 3 par ajout au milieu aqueux d'environ 1 litre d'acide sulfurique.

On ajoute ensuite de l'eau en une quantité telle que le volume total soit de 1 000 litres.

Après introduction des algues, la température est ramenée à environ 90-100°C.

L'ensemble est maintenu à cette température pendant une durée d'environ 1 heure (incluant la montée en température).

Au cours des 30 premières minutes, les cellules algales déjà broyées sont micro-éclatées au moyen d'un homogénéisateur de type ULTRA-TURAX® afin de favoriser l'extraction des molécules riches en dérivés d'aminopurine.

A l'issue de cette période, le chauffage est arrêté et l'extraction se poursuit alors sous agitation pendant environ 24 heures à 15° C.

### d) Séparation

La fraction riche en dérivés d'aminopurine est séparée des débris d'algues par centrifugation (séparation solide-liquide).

L'extrait centrifugé est ensuite filtré soit sur un filtre à terre de diatomées, soit sur un filtre à plateaux, puis à nouveau filtré sur une membrane jusqu'à 1µm.

Le filtrat ainsi obtenu comprend entre 1 et 5 % en poids d'extrait sec, qui présente les caractéristiques générales suivantes :
- Activité cytokinique (selon test biologique amaranthe) µg éq. BAP/100 g d'extrait sec : 500 - 5 000
- Densité : 1,00 - 1,02
- pH: 6-7
- Matière sèche : 10 - 50 g/l

L'extrait ainsi préparé peut être utilisé sous une forme plus ou moins concentrée, la concentration finale étant déterminée en fonction de la teneur recherchée en dérivés actifs dans l'application envisagée.

Ainsi, le filtrat mentionné précédemment peut être concentré, par exemple au moyen d'un évaporateur à flot tombant, de façon à ce que l'extrait sec représente de 10 à 20 % en poids de celui-ci.

Une déshydratation totale peut également être obtenue par exemple par atomisation, lorsque l'on recherche une présentation sous forme pulvérulente.

Pour les présentations liquides, sous forme d'extraits bruts ou concentrés, un conservateur tel que par exemple le chloro-4-méthyl-3-phénolate de sodium peut être introduit à la dose de 0,1 à 0,3 %.

De même le pH peut être ajusté à une valeur de 6-7 par ajout d'hydroxyde de potassium.

### C/ Caractérisation des dérivés d'aminopurine présents au sein de l'extrait d'algue.

L'identification de l'extrait a été réalisée par la méthode immunoenzymatique (ELISA) utilisant le système avidine-biotine.

Cet essai repose sur l'utilisation d'anticorps anti-hormones dans un système ELISA par compétition.

L'échantillon à analyser est mis en compétition avec des quantités connues d'hormones, absorbées sur les parois de plaques de microtitration, pour une quantité limitante d'anticorps. A l'équilibre de la réaction, les plaques sont lavées et les anticorps fixés sont révélés au moyen d'un second anticorps couplé à un enzyme (peroxydase).

On mesure l'activité enzymatique associée aux anticorps fixés par colorimétrie.

Le système est étalonné sur chaque plaque de microtitration au moyen de gammes de dilution d'échantillons standards.

L'essai a été réalisé en utilisant un sérum dirigé contre la 6-(4-hydroxy-3-méthylbutyl-2-ényl) aminopurine, sur des échantillons non purifiés d'un extrait d'algues préparé selon l'exemple 1 présentant une activité de type aminopurine (466 µg éq. BAP/l selon le test d'Amaranthe), ainsi que sur des échantillons purifiés par extraction méthanolique de ce même extrait.

Dans ces conditions, l'extrait de l'exemple 1 (non purifié) manifeste une très forte immunoréactivité apparente vis-à-vis de l'anticorps, permettant ainsi d'identifier la 6(4-hydroxy-3-méthyl-butyl-2-ényl) aminopurine.

Ce même extrait après traitement par une solution méthanolique suivi d'une filtration, d'un passage sur Sep-pak C18 (Millipore) puis d'un fractionnement par HPLC, présente une immunoréactivité mesurée dans les fractions issues d'HPLC très faible. Cependant, les mesures de rendement de purification effectuées parallèlement, grâce aux marqueurs radioactifs ajoutés aux échantillons au début de l'extraction, ont révélé une perte énorme en hormones au cours de la purification. L'essentiel de la radioactivité se retrouve dans les filtres, en association avec des précipités qui ne peuvent passer à travers des pores de 0,22 µm.

Après dialyse pendant 1 nuit à 4° C, une forte immunoréactivité demeure. L'immunoréactivité est donc associée à des structures d'un poids moléculaire supérieur au pouvoir de coupure de la membrane, c'est-à-dire de l'ordre de 10 000. On peut alors penser que les précipités obtenus lors de l'extraction méthanolique correspondaient à des dérivés d'aminopurine liés à des protéines, susceptibles de précipiter avec le méthanol et capables d'interférer avec les anticorps dans le système ELISA.

Cette méthode a ainsi permis d'identifier la 6(4-hydroxy-3-méthyl butyl-2-ényl) aminopurine sous forme libre ou liée, dans l'extrait de l'exemple 1.

### Exemple 2

### Procédé de préparation d'une source de calcium susceptible d'être utilisée dans le cadre de l'invention.

En tant que source de calcium préférée dans le cadre de l'invention, on utilisera du Lithothamnium pulvérulent.

Le *Lithothamnium* pulvérulent peut être par exemple préparé de la façon suivante :

L'algue est pêchée, à l'aide d'un bateau équipé d'une drague suceuse.

Avant transformation, l'algue se présente sous un aspect semblable à des coraux de taille variée (0,1 à 10 cm).

Les algues sont préalablement criblées pour éliminer les cailloux avant d'être acheminées vers un four rotatif permettant de les déshydrater (matière sèche comprise entre 85-99 %).

A l'issue du séchage, l'algue est broyée dans un broyeur à boulet afin d'obtenir une poudre pulvérulente (1 à 200 µm).

### EXEMPLE 3

### Procédé de préparation d'une composition dont l'utilisation est revendiquée selon la présente invention.

Dans le cadre de la présente invention, les meilleurs ont été obtenus en associant des extraits d'algues enrichis en dérivés d'aminopurine tels que préparés à l'exemple 1 et du *Lithothamnium* pulvérulent tel que préparé à l'exemple 2 en tant que source de calcium.
La fabrication de cette composition peut être réalisée de préférence au cours du processus de transformation de l'algue *Lithothamnium*.

Ainsi, une poudre de *Lithothamnium* enrichi en 6-(4-hydroxy-3-méthyl-butyl-2-ényl) aminopurine a été obtenue en suivant le protocole suivant.

Une solution de dérivé d'aminopurine préparée à l'exemple 1 est pulvérisée à raison de 0,1 à 10 % sur du *Lithothamnium.* Cette pulvérisation peut être effectuée lors du séchage au four rotatif ou du broyage (broyeur à boulet), mentionné à l'exemple 2.

Le produit ainsi obtenu présente la composition et les propriétés suivantes :

| Activité biologique (selon test biologique amaranthe) | 0,05 - 50 000 mg eq. BAP/T |
|---|---|
| Matières minérales | 800 - 995 kg/T |
| Calcium | 200 - 350 kg/T |
| Magnésium | 10 - 50 kg/T |
| Fer | 1 500 - 3 500 g/T |
| Manganèse | 400 - 600 g/T |
| Etain | 100 - 300 g/T |
| Indium | 100 - 300 g/T |
| Phosphore | 2 500 - 5 000 g/T |
| Aluminium | 200 - 800 g/T |
| Iode | 1 000 - 1 400 g/T |
| Nickel | |
| Strontium | 100 - 200 g/T |
| Cuivre | 5 - 20 g/T |
| Cobalt | 0.5 - 3 g/T |
| Zinc | 5 - 20 g/T |
| Molybdène | 0,5 - 2 g/T |
| Fluor | 10 - 100 g/T |
| Bore | 50 - 100 g/T |
| Soufre | 3 000 - 9 000 g/T |
| Potassium | 1 000 - 3 000 g/T |

### EXEMPLE 4

### Mise en évidence de l'action des compositions selon sur l'initiation des procéssus de germination et le développement des semis.

### Exemple 4.1 - Essai sur la betterave (Variété ECRIN)

### a) Protocole expérimental

Les lots de semences sont reçus enrobés (PMG = 10,8 g) par un mélange de fongicides (Thirame, Iprodione, Hymexazol) et d'un insecticide (N-Methylcarbamate de dimétrhyl-2,2 dihydro-2,3 benzofurannyle-7). Par lots de 30, elles sont mises à germer en boîtes de Pétri sur du papier imbibé par de l'eau distillée, à 19° C (les semences de betteraves germent à une température inférieure à 2° C), à l'obscurité. Le taux de germination et la longueur de la radicule sont mesurés après 5 jours. Les semences sont traitées par le produit de l'exemple 3.

Différentes activités cytokiniques du produit de l'exemple 3 variant entre 8,2.10 ⁻⁶ à 8,2.10⁻⁸ µg éq. BAP/semence sont étudiées comparativement à un témoin eau.

### b) Résultats

Le produit de l'exemple 3 améliore de façon conséquente, le taux de germination après 5 jours. Ce taux de germination est maximal pour une activité de 8,2.10⁻⁶ µg éq. BAP/ semence avec une amélioration de près de 70 % par rapport au témoin.

**TABLEAU I**

| CARACTERISTIQUES | TEMOIN H2O | Produit de l'exemple 3 (µg éq. BAP/semence) | | |
|---|---|---|---|---|
| | | 8,2.10⁻⁶ | 8.2.10⁻⁷ | 8,2.10⁻⁷ |
| TAUX DE GERMINATION (%) | 29 | 49 | 42 | 36 |
| % DU TEMOIN | - | + 69 | + 45 | + 24 |

### Exemple 4.2 - Essai sur le tournesol (Variété DOMINO)

### a) Protocole expérimental

L'étude est conduite à partir de semences traitées avec Le produit de l'exemple 3 aux doses de 6,5.10⁻⁶ à 6,5.10⁻⁸ µg éq. BAP/semence. Les semences sont enrobées dans un mélange pour la protection contre les maladies (Quinolate Pro + Apron® contenant comme matières actives du carbendazine de l'oxyquinoléate de cuivre et du métalaxyl).

Le produit de l'exemple 3 est remplacé par de l'eau distillée pour les lots témoins.

Des lots de 30 individus sont mis à germer en boîtes de Pétri sur du papier filtre imbibé par de l'eau distillée, à 25° C, à l'obscurité pendant 96 heures .

L'action du produit de l'exemple 3 est évaluée par la mesure de l'élongation de la radicule.

### b) Résultats

Après 96 heures de culture, le produit de l'exemple 3 à la dose de 6,5.10⁻⁷ µg éq. BAP provoque une augmentation significative de près de 29 % la longueur de la radicule.

**TABLEAU II**

| CARACTERISTIQUES | TEMOIN H20 | Produit de l'exemple 3 (µg/éq. BAP/semence) | | |
|---|---|---|---|---|
| | | 6,5.10⁻⁶ | 6,5.10⁻⁷ | 6.5.10⁻⁸ |
| LONGUEUR DE LA RADICULE (mm) | 65 | 71 | 84 | 69 |
| % DU TEMOIN | - | + 9 | + 29 | + 6 |

### Exemple 4.3 - Essai sur le maïs

### A/ Variété LIMAGRAIN LG02

### a) Protocole expérimental

Le semis du maïs (Limagrain LG02) a été réalisé en contre saison au mois d'Octobre dans des pots de 4 litres remplis de venniculite et placés sous serre non chauffée. Deux lots de plantules homogènes (12 témoins et 15 traitées) ont été triés en vue d'une étude de la vitesse de croissance du maïs traité ou non, avec Le produit de l'exemple 3. Les conditions climatiques ont été très défavorables lors de l'essai : faibles températures (le maïs est une plante qui ne pousse pas en dessous de 6° C) et forte humidité. Très vite, des attaques fongiques sont apparues. L'essai a néanmoins pu être poursuivi pendant 8 semaines.

Chaque plante a reçu tous les deux jours une solution nutritive (Mazé modifié). En outre, cette solution nutritive a été enrichie, pour l'un des deux lots de maïs, avec le produit de l'exemple 3 ; l'activité dans le milieu nutritif étant de 150 µg éq. BAP/l.

### b) Résultats

En début de développement, la vitesse d'apparition des feuilles chez le maïs traité, avec le produit de l'exemple 3, a tendance à être plus rapide que chez le maïs témoin.

Au-delà de la semaine 6, on constate en outre que le maïs traité a beaucoup mieux résisté aux attaques fongiques (survenant à la base du pied) que le témoin. 86,7 % des maïs traités sont encore viables en semaine 8 contre seulement 50 % chez les témoins.

Le tableau III mentionne le taux de survie de plantules de maïs var. Limagrain LGO2 cultivées pendant 8 semaines en conditions sous-optimales en température et en intensité lumineuse.

**TABLEAU III**

| TRAITEMENT | TAUX DE SURVIE (%) | | | | | |
|---|---|---|---|---|---|---|
| | 1 | 2 | 3 | 4 | 6 | 8 |
| TEMOIN | 100 | 83.8 | 75.0 | 66.7 | 58.3 | 50 |
| PRODUIT DE L'EXEMPLE 3 (% du témoin) | 100 | 93,3 + 11 % | 93,3 + 24 % | 93,3 + 40 % | 86,7 + 49 % | 86,7 + 73 % |

### B/ Variété SABRINA

### a) Protocole expérimental

Les semis de maïs variété Sabrina sont effectués (lots de 15) en pot (8 pots/traitement) de surface 25,4.10⁻³ m², ce qui correspond à une densité de semis de 590 graines/m². Les pots contiennent un mélange de tourbe enrichie, terre, sable en proportions équivalentes.

Les plantes sont cultivées en serre. Le produit de l'exemple 3 est mélangé au sol à raison de 100 kg/ha équivalent à une activité cytokinique de 45.10⁻² mg éq BAP/ha. L'action du Produit de l'exemple 3 est comparée à celle d'un témoin eau et à celle d'un témoin lithothamne.

La vigueur des semis de maïs est appréciée après 6 semaines de culture d'après l'évolution du poids sec de l'appareil végétatif.

### b) Résultats

A l'issue de la période, la production moyenne par plante dans le cas du témoin eau, est de 2,8 g. L'incorporation du lithothamne seul n'apporte aucune modification sur la croissance. Par contre, l'incorporation du produit de l'exemple 3 entraîne une augmentation de près de 21 % du poids sec.

Les résultats obtenus sont regroupés au tableau IV ci-après.

**TABLEAU IV**

| MATIERE SECHE | | TEMOIN H20 | TEMOIN LITHOTHAMNE | PRODUIT DE L'EXEMPLE 3 |
|---|---|---|---|---|
| RACINES | (g/plant) | 0,44 | 0,50 | 0,56 |
| | % du témoin H20 | - | + 14 % | + 27 % |
| APPAREIL VEGETATIF | (g/plant) | 2.8 | 2,8 | 3,4 |
| | % du témoin H20 | - | 0 | + 21 % |

### EXEMPLE 5

### Mise en évidence de l'action des compositions, dont l'utilisation est revendiquée selon l'invention, sur le développement des structures végétales de production.

### Exemple 5.1 - Essai sur les grandes cultures

### A/ Ray-grass d'Italie

### a) Protocole expérimental

Un essai est réalisé en plein champ sur Ray-grass d'Italie, variété Billion, dans la région d'Arras (Nord). Cet essai comprend 5 modalités à 4 répétitions.

Le produit de l'exemple 3 est ainsi incorporé au sol à différents taux de 200 kg/ha, 500 kg/ha et 1 000 kg/ha correspondants respectivement à des activités de 0,36 mg/ha, 0,90 mg/ha et 2,70 mg/ha. La fertilisation azotée apportée en cours de culture est de 160 kg/ha. La récolte est faite manuellement au stade gonflement/préépiaison.

### b) Résultats

Toutes les modalités de traitement avec le produit de l'exemple 3 donnent des résultats très positifs. La réponse agronomique de l'essai est excellente.

Si aucune différence entre parcelles n'est relevée à la levée, les observations en végétation indique par contre une meilleure vigueur des parcelles traitées au stade fin tallage et une coloration plus forte par rapport au témoin.

A la récolte, il y a confirmation de ces observations avec une régularité étonnante à la pesée de chacune des répétitions et des rendements très améliorés.

Le traitement à la dose de 500 kg/ha permet un gain de rendement de plus de 16,5 % (soit 28,9 tonnes/ha contre 24,8 pour le témoin). Dans le cas d'un apport de 1 tonne/ha, le gain de rendement atteint 24,4 % (soit 30,9 qx/ha contre 24,8 pour le témoin).

Les résultats obtenus sont regroupés au tableau V ci-après.

**TABLEAU V**

| TRAITEMENT | | RENDEMENT | | |
|---|---|---|---|---|
| | | (T/ha) | VARIATIONS/TEMOIN | |
| | | | T/ha | % |
| TEMOIN | | 24,82 | - | 100 |
| PRODUIT DE L'EXEMPLE 1 (Dérivé algal d'aminopurine) | | 26.96 | 2,14 | 108,6 |
| PRODUIT DE L'EXEMPLE 3 | 200 Kg/ha (0.36 mg eq. BAP/ha) | 28,30 | 3,48 | 112,9 |
| | | | | |
| | 500 Kg/ha (0,90 mg eq. BAP/ha) | 28,92 | 4,10 | 116,5 |
| | | | | |
| | 1 000 Kg/ha (2.70 mg eq BAP/ha) | 30,89 | 6,07 | 124,4 |

### Exemple 5.2 - Essai sur pois protéagineux

### A/ Essai plein champ

### a) Protocole expérimental

Un essai est réalisé en plein champ sur pois protéagineux variété Solara. Cet essai comprend 3 modalités.

Le produit de l'exemple 3 est incorporé au sol à raison de 200 Kg/ha (i.e 0,36 mg éq. BAP/ha) et de 500 Kg/ha (0,90 mg éq. BAP/ha). Le semis est effectué le 9 Avril. Aucun apport d'azote n'est effectué en cours de culture.

La superficie de chaque parcelle élémentaire est de 54 m². Chaque modalité fait l'objet de 4 répétitions:

Les traitements avec le produit de l'exemple 3 apporté au sol montrent des résultats positifs. Ils permettent d'augmenter les rendements de 1,5 à 2,1 quintaux/ha, c'est-à-dire de 3,4 à 4,8 %.

Les résultats obtenus ont été reportés au tableau VI

**TABLEAU VI**

| TRAITEMENT | RENDEMENT | | |
|---|---|---|---|
| | (QX/HA) | VARIATIONS/TEMOINS | |
| | | QX/HA | % |
| TEMOIN | 43,9 | - | 100 |

| PRODUIT DE L'EXEMPLE 3 | | | |
|---|---|---|---|
| | | | |
| 200 Kg/ha (0,36 mg éq BAP/ha) | 45,4 | 1,5 | 103,4 |
| | | | |
| 500 Kg/ha (0,90 mg éq BAP/ha) | 46,0 | 2,1 | 104,8 |

### B/ Essai en serre

### a) Protocole expérimental

Les semis de pois fourrager variété Solara sont effectués (lots de 15) en pot (8 pots/traitement), de surface 25,4.10⁻³ m², ce qui correspond à une densité de semis de 590 graines/ m². Les pots contiennent un mélange de tourbe enrichie, terre, sable en proportions équivalentes.

Les plantes sont cultivées en serre. Le produit de l'exemple 3 est mélangé au sol à raison de 100 kg/ha, pour différentes activités biologiques (45, 4.5 et 0.45 µg éq. BAP/ha).

Pour les lots témoins, le produit de l'exemple 3 est remplacé par de l'eau distillée (Témoin H20) ou par du Lithothamne (Témoin M).

Les expérimentations portent sur les pois variété Solara cultivés en serre pendant 5 semaines.

L'action du produit de l'exemple 3 est comparée à celle d'une cytokinine de synthèse, la BAP, dont les concentrations testées se rapprochent des concentrations optimales équivalent BAP de l'extrait (0,5 ; 0,05 et 0,005 mg de BAP / ha).

### b) Résultats

L'application de lithothamne seul ne modifie pas la croissance du système racinaire et de l'appareil végétatif.

L'apport du produit de l'exemple 3 induit une augmentation significative de la matière sèche de l'appareil racinaire et végétatif chez le Pois.

La croissance racinaire ou de l'appareil végétatif est améliorée de 10 à 22 % pour les jeunes plantes selon les activités biologiques.

Les résultats obtenus après 5 semaines de culture sont reportés au tableau VII

**TABLEAU VII**

| MATIERE SECHE | | TEMOIN H20 | TEMOIN LITHOTHAMNE | PRODUIT DE L'EXEMPLE 3 (µg éq. BAP/ha) | | |
|---|---|---|---|---|---|---|
| | | | | 45 | 4,5 | 0.45 |
| RACINES | mg | 54 | 60 | 60 | 66 | 64 |
| | % du témoin H20 | - | + 11% | + 11% | + 22 % | +19 % |
| APPAREIL VEGETATIF | mg | 280 | 290 | 310 | 330 | 300 |
| | % du témoin H20 | - | + 4 % | + 11% | + 18 % | + 7 % |

### Exemple 5.3 - Essai sur la luzerne

### a) Protocole expérimental

Des semences de luzerne (variété Milfeuil, société RAGT) ont été mises en culture, en octobre, sur vermiculite. Après une semaine, 32 plantules homogènes ont été triées et réparties en deux lots de 16 individus (16 témoins et 16 traités).

Les 32 plantes ont ensuite reçu, deux fois par semaine, une solution nutritive adaptée. Le produit de l'exemple 3 a été rajouté à la solution nutritive des 16 plantes traitées pour donner une activité de 150.10-3 µg éq . BAP/l. En outre, un arrosage à l'eau du robinet a été effectué en fonction des besoins des plantes, ceci toutes les 48 heures.

### b) Résultats

Un suivi de la vitesse de développement de la luzeme a été réalisé.

Les résultats observés (voir tableau VIII) montrent que l'implantation de la luzerne en conditions de cultures difficiles (température et éclairement faibles) a tendance à être favorisée par l'apport de produit de l'exemple 3.

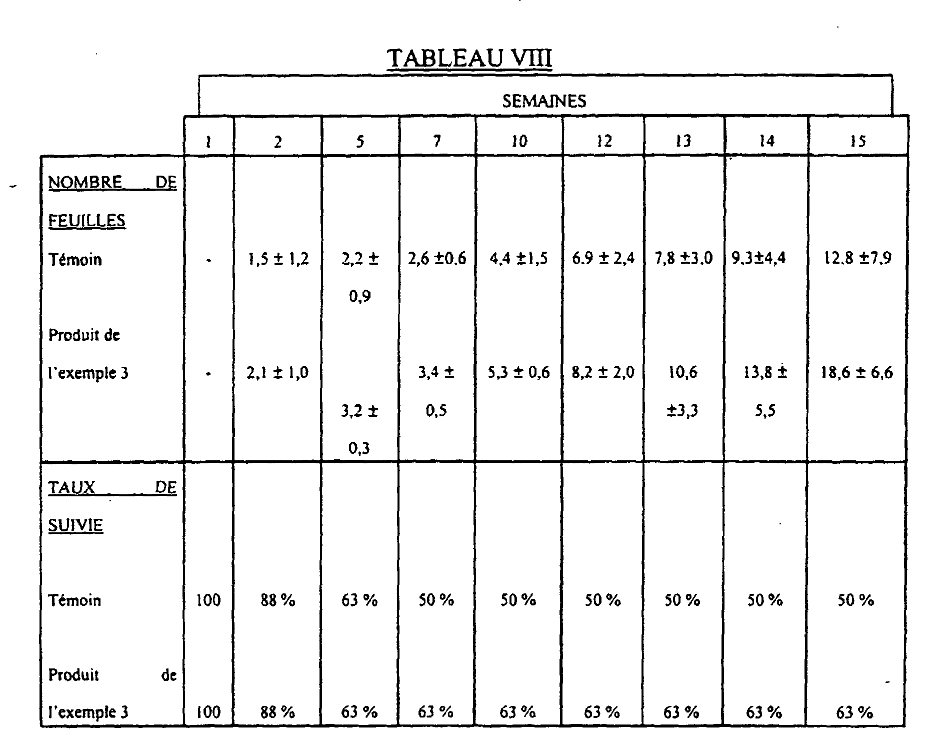

Au delà de 15 semaines, le comptage du nombre de feuilles par plante devient trop difficile (si l'on veut conserver les plantes en culture).

Deux nouveaux critères d'expression de la vitesse de développement et de croissance des plantes sont définis :
- le nombre de noeuds sur la tige principale (N/TP)
- la longueur de la tige principale ( Lg TP)

Les observations faites la semaine 17 sont présentées dans le tableau IX ci-après :

**TABLEAU IX**

| CRITERE | NOMBRE DE NOEUDS SUR LA TIGE PRINCIPALE | LONGUEUR DE LA TIGE PRINCIPALE (en cm) |
|---|---|---|
| TEMOIN | 9,00 ± 2,10 | 19.30 ± 9,50 |
| PRODUIT DE L'EXEMPLE 3 | 12,70 ± 2,75 | 23,40 ± 8,50 |

Selon ces critères, les luzernes traitées conservent une avance dans leur développement.

Ainsi, chez la luzerne, le produit de l'exemple 3 appliqué en période de stress climatique, sur des plantes en début de développement a favorisé l'implantation de la culture. L'effet améliorateur s'est notamment manifesté sur la vitesse de croissance (longueur de la tige principale en semaine 17).

### Exemple 5.4 - Essai sur le colza

### a) Protocole expérimental

Pour cet essai, 16 plantes de la variété Ariana ont été utilisées : 8 témoins et 8 traitées avec le produit de l'exemple 3. Le semis d'une centaine de graines a été réalisé en novembre sur vermiculite. La germination a été obtenue en chambre de culture à la température de 26° C et à l'obscurité.

Au bout d'une semaine, un tri des plantules ainsi obtenues a été réalisé. Les 16 individus nécessaires à l'expérimentation ont été sélectionnés pour leur homogénéité et repiqués dans des pots de 4 litres remplis de vermiculite. Les pots sont placés sous la serre.

Le traitement a consisté à ajouter le produit de l'exemple 3 dilué 1 000 fois au milieu nutritif des colzas «traités». La concentration dans le milieu nutritif final correspond à une activité de 150.10⁻³ µg BAP/l. La composition de ce milieu nutritif est celle d'une solution de Mazé modifiée (Mazé, 1995). Deux fois par semaine, les plantes ont ainsi été nourries avec 100 ml de cette solution, enrichie ou non avec le produit de l'exemple 3. Par ailleurs, tous les deux jours, l'ensemble des plantes est arrosé de façon homogène, ceci en fonction de leurs besoins. Cet arrosage a cessé au début de la maturation des grains.

Un suivi de la vitesse de développement a été réalisé sur la période de 1 à 16 semaines après repiquage.

On a alors mesuré le nombre de feuilles fonctionnelles.

Enfin, la récolte s'est échelonnée sur six semaines et a été réalisée sur la période Juillet-Août. Les différents paramètres mesurés ou calculés ont été :
- le poids en grains de chaque plante (PDS) ou rendement.
- le nombre de siliques par plante (NS/P).
- le nombre de grains par silique (NG/S).
- le nombre de grains par plante (NG/P).

### b) Résultats

Les résultats récapitulés dans le tableau X montrent que le nombre de feuilles fonctionnelles est identique entre le témoin et le produit de l'exemple 3.

**TABLEAU X**

| TRAITEMENT | NOMBRE DE FEUILLES FONCTIONNELLES (SEMAINES) | | | | | | | |
|---|---|---|---|---|---|---|---|---|
| | 3 | 5 | 8 | 10 | 11 | 12 | 13 | 15 |
| TEMOIN | 3 ± 0,0 | 4,4 ± 0,2 | 5,2 ± 0,4 | 7,9 ± 0,6 | 9,0 ± 0,7 | 9,7 ± 0,8 | 11,5 ± 0,9 | 13,1 ± 2,2 |
| PRODUIT DE L'EXEMPLE 3 | 3 ± 0,0 | 4,4 ± 0,2 | 5,3 ± 0,4 | 7,6 ± 0,4 | 8,9 ± 0,4 | 9,8 ± 0,5 | 11,4 ± 0,8 | 13,4 ± 2,3 |

Des observations visuelles ont par ailleurs montré que les feuilles des colzas traités étaient généralement plus étalées que celles des témoins (surface foliaire plus importante).

Outre les analyses chimiques, des observations visuelles effectuées pendant les mois d'Avril à Juin (période durant laquelle les températures ont été élevées sous la serre) ont montré que les colzas «traités» semblaient mieux résister aux déficits hydriques causés par les coups de chaleur. En mai, notamment, les feuilles des plantes témoins se sont rapidement affaissées alors que l'humidité relative de l'air sous la serre était faible, ce qui n'était pas le cas chez les colzas recevant le produit de l'exemple 3.

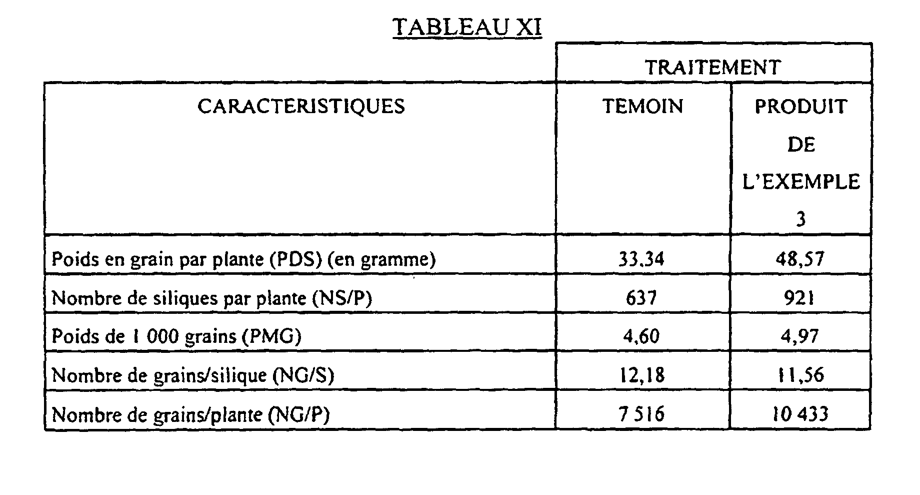

La récolte des grains et siliques s'est étalée sur six semaines. Les grains ont en effet été prélevés à la main avec leur silique uniquement lorsqu'ils étaient matures et secs.

De manière générale, comme le montre le tableau XI, tous les paramètres composant le rendement des colzas «traités» ont été supérieurs à ceux des témoins, à l'exception du nombre de grains par silique.

Afin d'affiner ces résultats, une analyse a été effectuée sur les données recueillies semaine après semaine pendant la période de récolte, et les résultats ont été regroupés au tableau XII.

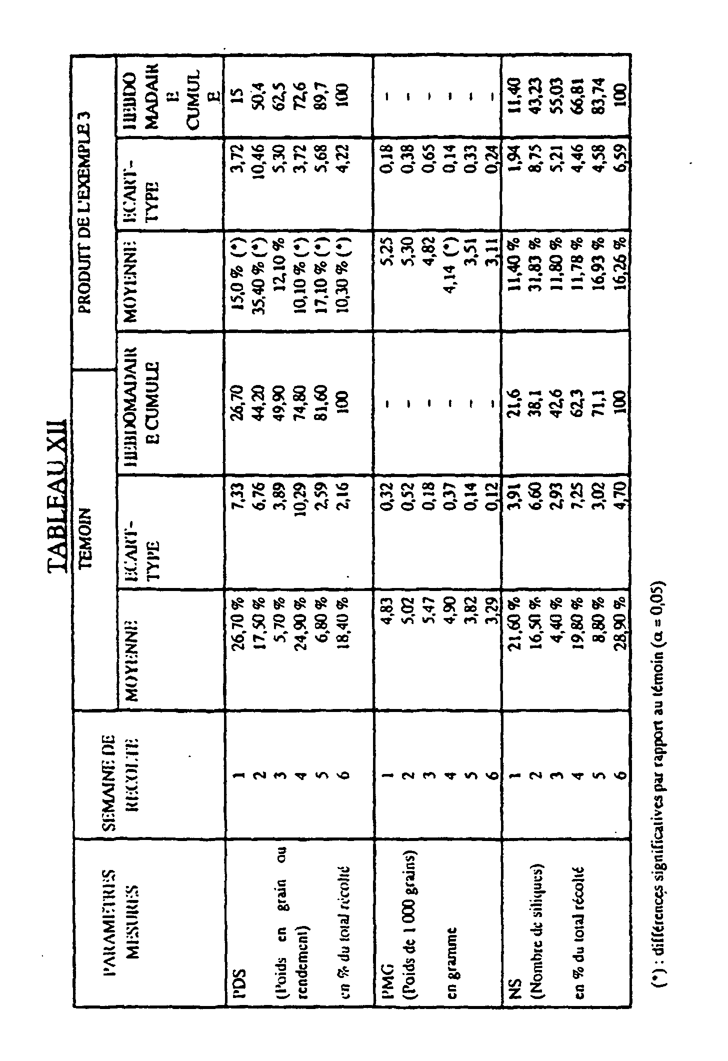

En semaine 1 et en semaine 6, il apparaît que le rendement relatif en grain (PDS) du colza « témoin» est supérieur de façon significative (α = 0,05) à celui du colza « traité ». En revanche, entre la seconde et la cinquième semaine, le résultat inverse est enregistré, puisque 74,8 % de la production totale a été récoltée dans cet intervalle de temps pour le colza « traité », contre seulement 54,8 % pour le « témoin ».

Ce résultat est particulièrement important pour l'agriculteur. En effet, la récolte au champ est effectuée en une seule fois. Or, à ce moment là, une partie des siliques se sont déjà ouvertes, alors que d'autres ne sont pas encore matures. L'agriculteur doit choisir la date de récolte de manière à limiter au maximum ces pertes de rendement. Son choix sera d'autant plus aisé si la période durant laquelle la maturation des grains s'effectue, est raccourcie. Le traitement de la culture avec le produit de l'exemple 3 permet d'obtenir un tel résultat.

L'analyse des composants permet, en outre, de constater que le critère NS/P (Nombre de Siliques par Plante) chez le colza « traité » est fortement corrélé au rendement (PDS). Le coefficient de corrélation est de r=0,9435. Le PMG (poids de 1000 grains) a une influence moindre sur le rendement (coefficient de corrélation r=0,4857).

Les mêmes observations peuvent être réalisées en ce qui concerne les plantes témoins. Néanmoins, les coefficients de corrélation obtenus sont nettement plus faibles (r=0,0791 seulement entre PMG et PDS).

Le nombre de siliques par plante est donc un critère essentiel pour la détermination du rendement chez le colza «traité ». Il convient néanmoins de déterminer si les siliques les plus efficaces, en termes de production de grains, sont celles qui ont le plus de chance d'être récoltées au champ. Le rapport PDS/NS permet d'exprimer cette efficacité. Il correspond au pourcentage du nombre de siliques récoltées pendant la même période.

Le tableau XIII permet de visualiser ces résultats.

**TABLEAU XIII**

| PARAMETRES | SEMAINE DE RECOLTE | TEMOIN | | PRODUIT DE L'EXEMPLE 3 | |
|---|---|---|---|---|---|
| | | Moyenne | Ecart-type | Moyenne | Ecart-type |
| Poids de grains/ nombre de siliques | 1 | 1,24 | 0.39 | 1.35 | 0.20 |
| | 2 | 1,08 | 0,09 | 1,10 | 0,06 |
| | 3 | 1,27 | 0,09 | 1,03* | 0,08 |
| | 4 | 1,15 | 0,24 | 0,90 | 0,07 |
| | 5 | 0,75 | 0,15 | 0,98 | 0,18 |
| | 6 | 0,66 | 0,09 | 0,92 | 0,11 |

| | | | | | |
|---|---|---|---|---|---|
| * : différence significative au niveau α =0,05 | | | | | |

Chez le colza témoin, les siliques les moins « efficaces » (contribuant le moins au rendement) sont celles récoltées en semaines 4, 5 et 6. Or, c'est à ce moment qu'elles sont les plus nombreuses à arriver à maturité (57,5 %).

En revanche, chez le colza «traité », « l'efficacité » des siliques entre la deuxième et la cinquième semaine est stable autour du rapport 1,00. C'est à ce moment que les siliques sont les plus nombreuses à arriver à maturité (72,3 %).

Ainsi, le traitement avec le produit de l'exemple 3 permet de réduire la durée de période de maturation des grains, sans diminuer, en contre partie, l'efficacité des siliques au moment où la production est optimale.

### Exemple 5.5 - Essai sur le maïs

### A/ Variété SABRINA

### a) Protocole expérimental

L'essai est réalisé dans la région sud ouest, sur le site de Bergerac.

Dans ces essais, le maïs est implanté à haute densité et l'irrigation conduite à son optimum. Le produit de l'exemple 3 est appliqué en absence de fertilisation azotée, soit en traitement des semences, soit en localisé au sol, à la dose de 100 kg/ha.

Le dispositif expérimental comprend des blocs à 4 répétitions. Chaque parcelle élémentaire est constitué de 6 rangs de 20 m ou de 6 rangs de 12 m, avec récolte des 2 rangs centraux. Les contrôles effectués sur les lots témoins et traités se font sur les éléments de rendements (15 %), de poids de mille grains (15 %), rendement grains/épi.

Le sol est de type sable argilo limoneux, avec teneur en matière organique de 1,44 et un pH de 6,9.

### b) Résultats

Sur ce site et dans ces conditions expérimentales, le produit de l'exemple 3 permet de gagner plus de 8 à 19 quintaux (15 % MS) lorsqu'il est appliqué en localisé au sol, en fonction des quantités apportées. Dans le cas du traitement de semences, le gain avoisine les 14 quintaux / ha ; ainsi, le produit de l'exemple 3 favorise le rendement quelque soit le mode d'apport. Cet écart n'est pas expliqué par le PMG ni par les autres composantes mesurées, le produit de l'exemple 3 agissant en fait sur la composante nombre d'épis par m2.

**TABLEAU XIV**

| CARACTERISTIQUES | | RESULTATS | VALEUR OPTIMALE |
|---|---|---|---|
| Texture (%) | | | |
| | Argile | 14,6 | - |
| | Limon | 27,1 | - |
| | Sables | 58,7 | - |
| pH eau | | 6,9 | 6,5 |
| Matières organiques | | 1,44 | 2,5 |
| Phosphores (mg / kg) | | 602 | |
| Potassium (mg / kg) | | 376 | 257 |
| Calcium - CaO (mg / kg) | | 1775 | 2448 |
| Magnésium - MgO (mg / kg) | | 148 | 175 |
| Zinc EDTA | | 6,18 | 4,4 |

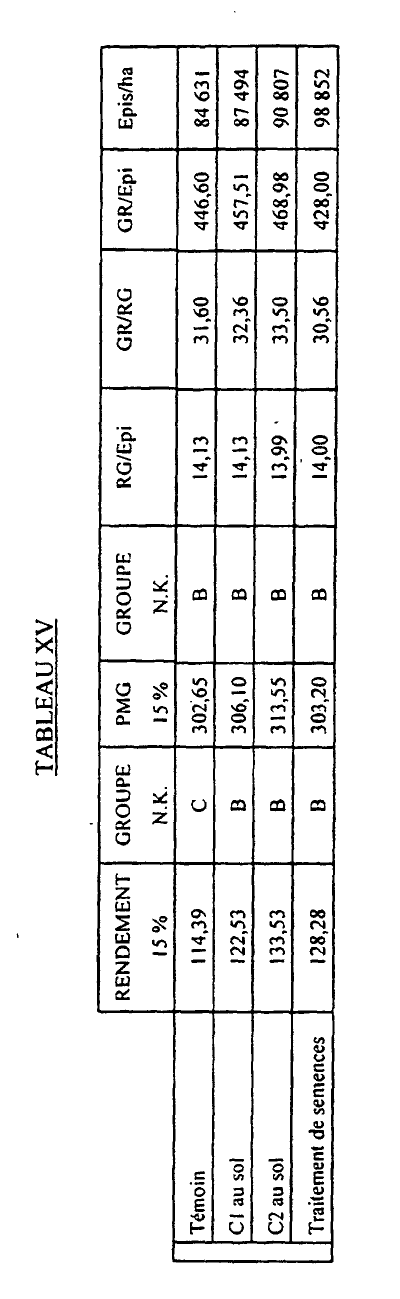

### B/ Variété APACHE

### a) Protocole d'expérimentation

Un essai maïs variété Apache a été réalisé chez un agriculteur de la zone Nord Bretagne (Ploëzal 22). La superficie de la parcelle est de 2,5 Ha. Le produit de l'exemple 3 est apporté comparativement à une zone témoin Lithothamne à la dose de 1,6 tonnes/ha. Cet apport en produit de l'exemple 3 correspond à une activité cytokinine de 0,02 mg/ ha. La surface des parcelles élémentaires est de 20 m². Chacune des modalités fait l'objet de 3 répétitions. Les semis sont réalisés le 26 avril à la densité de 114 000 grains/ ha.

La récolte est effectuée le 25 octobre. Les prélèvements sont réalisés sur 2 mètres linéaires au centre de chaque parcelle élémentaire. Les épis sont ensuite égrenés avec une égreneuse manuelle.

### b) Résultats

Le produit de l'exemple 3 est appliqué sur un sol assez limoneux se caractérisant par une déficience en calcium et en magnésium.

Ce déficit calcique nécessite un apport de 2,45 T en CaO, à répartir sur 3 ans. Ainsi, l'apport en produit de l'exemple 3 va couvrir, la première année, le tiers des besoins en calcium.

La production de grains prélevée sur 2 mètres linéaire et obtenue pour chacune des modalités ainsi que pour chacune des répétitions correspondantes est présentée dans le tableau XVI :

**TABLEAU XVI**

| TRAITEMENT | RENDEMENT GRAINS (g/2 m linéaire) | | | | | |
|---|---|---|---|---|---|---|
| | Répétitions | Moyenne | Qx/sec/ha | Qx sec/ha | Variation qx sec/ha | Temoin % |
| TEMOIN LITHOTHAMNE | 1543 | | | | | |
| | 1789 | 1781 | 94,9 | 94,9 | - | 100 |
| | 2013 | | | | | |
| PRODUIT DE L'EXEMPLE 3 | 2017 | | | | | |
| | 1755 | 1972 | 105,2 | 105,2 | 10,3 | 111 |
| | 2144 | | | | | |

Dans les conditions de l'expérimentation, l'apport du produit de l'exemple 3 améliore, par rapport à un amendement traditionnel en Lithothamne, le rendement en grains de plus de 10 %. Le rendement (15 % MS) à l'hectare passe ainsi de 94,9 quintaux pour le lithothamne à 105,2 quintaux pour le produit de l'exemple 3 soit une augmentation de 10,3 quintaux à l'hectare.

### Exemple 5.6 - Essais sur cultures spécialisées

### A/ Melons

### a) Protocole expérimental

Cet essai a été réalisé dans la région de St Gilles (FRANCE). Un tunnel de plastique est divisé en surfaces égales de 360 m² environ.

L'apport en produit de l'exemple 3 avant repiquage des plants, est comparé à la technique de l'agriculteur qui utilise dans le sol acide, un carbonate de calcium (40% CaO) et de magnésium (10% MgO), à raison de 1,5 tonne à l'hectare. La dose de produit apporté, est ajustée sur la quantité de CaO proposée par l'agriculteur.

La variété de melon Luna, greffé sur RS841, est mise en place le 2 février.

L'analyse du sol a porté sur les moitiés du tunnel, appelés « Nord » (carbonate de Ca et Mg) et « Sud » (Produit de l'exemple 3). Les résultats soulignent l'homogénéité relative des 2 parties du tunnel : forte acidité (pH eau=5,3), tendance marquée à l'acidification ( pH Kcl = 4,6).

Les pourcentages de saturation des cations (Ca, Mg, K) par rapport à la capacité d'échange ont été calculés.

**TABLEAU XVII**

| | PRELEVEMENT | |
|---|---|---|
| PARAMETRES | NORD | SUD |
| 100 Ca CEC | 87.3 | 79,7 |
| | | |
| 100 K CEC | 8,6 | 7,7 |
| | | |
| 100 Me CEC | 22,9 | 19,4 |

Le contrôle a été effectué sur le nombre de melons produit en différenciant trois classes de calibre correspondants à chaque date de récolte. Pour chacune des classes, on a mesuré le poids moyen d'un fruit.

### b) Résultats

La récolte des melons a débuté le 15 juillet et s'est poursuivie jusqu'au 25 juillet. Elle s'est effectuée sur une période de 10 jours à 6 moments différents.

Les résultats obtenus sont mentionnés dans le tableau XVIII

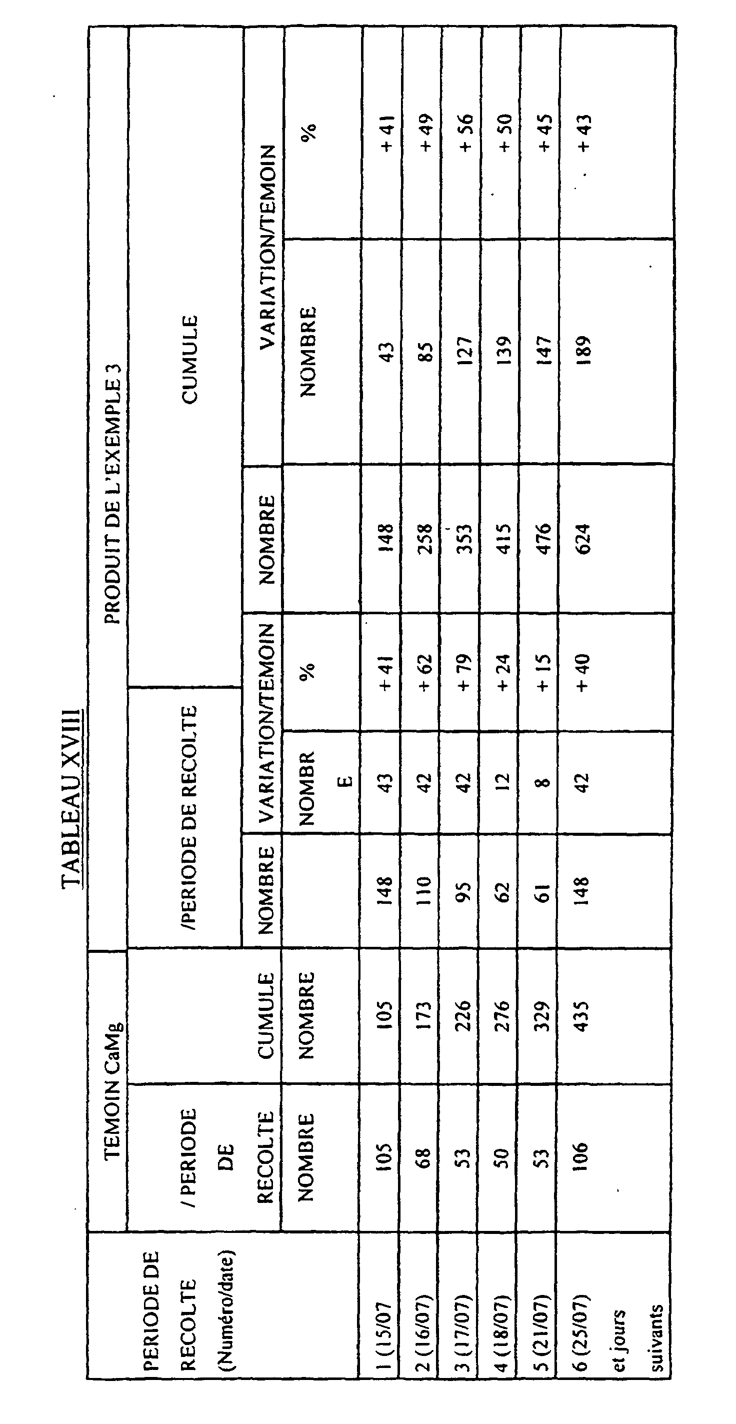

En fin de récolte, les zones traitées avec le produit de l'exemple 3 produisent de l'ordre de 173,3 melons/ 100 m2 contre 110,8 melons/ 100 m2 pour le témoin correspondant à une augmentation de la production de 43,8 %.

Cette augmentation ne s'est pas faite au détriment du calibre de la production. Bien au contraire, cette meilleure productivité a été accompagnée d'une augmentation des gros calibres (+ 43,9 %) et des moyens calibres (+ 42,6 %), comme le montrent les résultats mentionnés au tableau XIX.

**TABLEAU XIX**

| CALIBRE | POURCENTAGE D'AUGMENTATION PRODUIT DE L'EXEMPLE 3 /TEMOIN (%) |
|---|---|
| ① GROS | 43,9 |
| ② MOYEN | 42,6 |
| ③ PETIT | 32,7 |

Les zones traitées présentent également une meilleure précocité, correspondant aux périodes où Les cours du melon sont les plus élevés.

En résumé, pendant la période du 15/07 au 25/07, la comparaison des deux formules d'amendement apportées au sol, donne une nette préférence en ce qui concerne le nombre total de melons, à la composition, dont l'utilisation est revendiquée selon l'invention, avec un supplément de 43,5 %.

### EXEMPLE 6

### Exemples de formulations de matières fertilisantes incorporant un dérivé actif d'aminopurine associé à une source de calcium.

D'une façon générale, la quantité de matière fertilisante à utiliser dans le cadre de l'invention sera de 100 kg à 3 Tonnes par hectare pour des activités biologiques comprises entre 0,05 à 100 000mg/ha.

De préférence, cette quantité sera de 100 à 1 000 kg pour des activités biologiques comprises entre 0,5 à 500 mg/ha équivalent BAP et encore de préférence de 1 mg à 10 mg équivalent BAP/ha.

On donnera ci-après à titre d'exemples diverses formulations utilisables selon l'invention avec des conditions de mise en oeuvre de ces formulations.

Les amendements seront utilisés entre 1 et 3 T/ha. Les engrais binaires et tertiaires seront appliqués entre 400 - 800 kg/ha.

### A - AMENDEMENT

| | |
|---|---|
| Dérivé Aminopurine | 10 mg eq BAP/ha |
| Lithothamnium | 1 000 kg |

| Cultures | Dose d'apport |
|---|---|
| Mais | |
| Céréales | 1 - 3 T/ha |
| Pâtures | |

### B - AMENDEMENT

| | |
|---|---|
| Dérivé aminopurine | 10 g eq BAP/ha |
| Lithothamnium | 1 000 kg |

| Cultures | Dose d'apport |
|---|---|
| Mais | |
| Céréales | 1 - 2 T/ha |
| Pâtures | |

### C - ENGRAIS MIXTE

| | |
|---|---|
| Dérivé aminopurine | 0,5 mg eq BAP/ha |
| Lithothamnium | 310 |
| Chlorure de potassium | 167 |
| Urée | 161 |
| Sulfate d'ammoniaque | QSP 1 000 |

| Cultures | Dose d'apport (kg/ha) |
|---|---|
| Pâtures | |
| Mais | 200 - 400 |
| Céréales | |

### D - ENGRAIS MIXTES

| | |
|---|---|
| Dérivé aminopurine | 500 mg eq BAP/ha |
| Lithothamnium | 297 kg |
| Phosphate de Gafsa | 536 kg |
| Chlorure de potassium | QSP 1 000 kg |

| | |
|---|---|
| Cultures | Dose d'apport ( kg/ha) |
| Toutes cultures | 300 - 500 |

### E - ENGRAIS MIXTES NPK 12-6-20 + MgO

| | |
|---|---|
| Dérivé aminopurine | 3 g |
| Lithothamnium | 158 kg |
| Phosphate d'ammoniaque | 116 kg |
| Sulfate d'ammoniaque | 186 kg |
| Urée | 156 kg |
| Oxide de magnésium | 50 |
| Chlorure de potassium | QSP 1 000 kg |

| Cultures | Dose d'apport ( kg/ha) |
|---|---|
| Mais | |
| Céréales | 400 - 800 |
| Prairies | |

## Revendications

1. Utilisation par voie exogène d'une association constituée d'au moins un dérivé naturel ou synthétique d'aminopurine ou d'un extrait d'algues riche en de tels dérivés, et d'une source de calcium, comme agent destiné à stimuler le processus de la germination et de la mise en place des structures végétales de production.

2. Utilisation selon la revendication 1, **caractérisée en ce que** le dérivé d'aminopurine précité est un dérivé naturel choisi dans le groupe comprenant la 6-(4 hydroxy-3-méthylbutyl-2-ényl) aminopurine, la 6-(4-hydroxy-3-méthylbutyl) aminopurine et la 6-(diméthylallyl) aminopurine.

3. Utilisation selon la revendication 1, **caractérisée en ce que** le dérivé d'aminopurine précité est un dérivé synthétique choisi dans le groupe comprenant la 6-(diméthylallyl) aminopurine de synthèse, la kinétine et la 6-benzylamino-purine.

4. Utilisation selon la revendication 1, **caractérisée en ce que** l'extrait d'algues enrichi en dérivés d'aminopurine est obtenu par un procédé comprenant les étapes suivantes : lavage, broyage, extraction et éventuellement, concentration.

5. Utilisation selon la revendication 4, **caractérisée en ce que** les algues permettant d'obtenir les extraits précités enrichis en dérivés d'adénine sont choisies dans le groupe comprenant *Halydris siliquosa, Ascophyllum nodosum, Fucus vesiculosus, Fucus serratus,* et de préférence *Halydris siliquosa.*

6. Utilisation selon l'une des revendications 1 à 5, **caractérisée en ce que** l'association précitée contient une quantité de dérivés d'aminopurine ou d'extraits d'algues enrichis en de tels dérivés permettant l'obtention d'une activité comprise entre 500 et 5 000 exprimée en microgrammes équivalents BAP (6-benzylaminopurine) pour 100 g d'extrait sec mesurée par le test Amaranthe.

7. Utilisation selon l'une des revendications 1 à 6, **caractérisée en ce que** la source de calcium précitée est choisie dans le groupe comprenant l'algue corallifère du genre *Lithothamnium,* les craies, le trez, la marne, la dolomie, les chaux, les écumes de sucrerie, les boues de calcification des eaux de forage, les scories thomas, les phosphates naturels, la cyanamide calcique, le chlorure de calcium et les sels de calcium d'acides aminés.

8. Utilisation selon la revendication 7, **caractérisée en ce que** la source de calcium précitée est constituée de *Lithothamnium* pulvérulent notamment obtenu par séchage et broyage.

9. Utilisation selon l'une quelconque des revendications précédentes pour le traitement de plantes, **caractérisée en ce que** la quantité de dérivés d'aminopurine ou d'extraits d'algues riches en de tels dérivés appliquée aux dites plantes est de préférence de 0,5 à 500 mg équivalent BAP par hectare, et de préférence de 1 mg à 10 mg équivalent par hectare.

10. Utilisation par voie hexogène d'une association constituée d'au moins un dérivé naturel ou synthétique d'aminopurine ou d'un dérivé d'algues riches en de tels dérivés, et d'une source de calcium, comme agent destiné à stimuler le processus de la germination et de la mise en place des structures végétales de production.

## Claims

1. Use via an exogenous pathway of a combination consisting of at least one natural or synthetic aminopurine derivative or of an algal extract rich in such derivatives, and a source of calcium, as an agent for stimulating the germination process and the development of plant production structures.

2. Use according to claim 1, **characterized in that** said aminopurine derivative is a natural derivative chosen among the group containing 6-(4-hydroxy-3-methylbutyl-2-enyl) aminopurine, 6-(4-hydroxy-3-methylbutyl) aminopurine and 6-(dimethylallyl) aminopurine.

3. Use according to claim 1, **characterized in that** said aminopurine derivative is a synthetic derivative chosen among the group containing synthetic 6-(dimethylallyl) aminopurine, kinetin and 6-benzylamino-purine.

4. Use according to claim 1, **characterized in that** the algal extract rich in aminopurine derivatives is obtained by a process comprising the following steps: washing, grinding, extracting and optionally concentrating.

5. Use according to claim 4, **characterized in that** the algae enabling said extracts rich in adenine derivatives to be obtained are chosen among the group containing *Halydris siliquosa, Ascophyllum nodosum, Fucus vesiculosus, Fucus serratus,* and preferably *Halydris siliquosa*.

6. Use according to any of claims 1 to 5, **characterized in that** said combination contains a quantity of aminopurine derivatives or of algal extracts rich in such derivatives such that an activity can be obtained lying between 500 and 5 000 as expressed as a BAP (6- benzylaminopurine) equivalent in microgrammes for 100 g of dry extract as measured by the Amaranthe test.

7. Use according to any of claims 1 to 6, **characterized in that** said source of calcium is chosen among the group containing the coralliferous alga of the genus *Lithoamnium,* chalks, trez (marine shell limestone sand), marl, dolomite, limes, factory waste lime, calcified sludges from drilling water, basic slag, natural phosphates, calcium cyanamide, calcium chloride and calcium salts of amino acids.

8. Use according to claim 7, **characterized in that** said source of calcium consists of *Lithoamnium* in powder form in particular obtained by drying and grinding.

9. Use according to any of the preceding claims for the treatment of plants, **characterized in that** the quantity of aminopurine derivatives or of algal extracts rich in such derivatives applied to said plants is preferably from 0.5 to 500 mg expressed as a BAP equivalent per hectare, and preferably from 1 mg to 10 mg of BAP equivalents per hectare.

10. Use via an exogenous pathway of a combination consisting of at least one natural or synthetic aminopurine derivative or an derivative of algae rich in such derivatives, and a source of calcium, as an agent for stimulating the germination process and the development of plant production structures.

## Patentansprüche

1. Verwendung auf exogenem Wege einer Zusammensetzung, bestehend aus mindestens einem natürlichen oder synthetischen Aminopurinderivat oder einem an solchen Derivaten reichen Algenextrakt und einer Calciumquelle als Mittel zum Stimulieren des Prozesses der Keimbildung und der Bereitstellung der pflanzlichen Produktionsstrukturen.

2. Verwendung gemäß Anspruch 1, **dadurch gekennzeichnet, dass** das vorgenannte Aminopurinderivat ein natürliches Derivat, ausgewählt aus 6-(4-Hydroxy-3-methylbutyl-2-enyl)aminopurin, 6-(4-Hydroxy-3-methylbutyl)aminopurin und 6-(Dimethylallyl)aminopurin, ist.

3. Verwendung gemäß Anspruch 1, **dadurch gekennzeichnet, dass** das vorgenannte Aminopurinderivat ein synthetisches Derivat, ausgewählt aus synthetischem 6-(Dimethylallyl)aminopurin, Kinetin und 6-Benzylaminopurin, ist.

4. Verwendung gemäß Anspruch 1, **dadurch gekennzeichnet, dass** der an Aminopurinderivaten angereicherte Algenextrakt durch ein Verfahren erhalten wird, das die folgenden Schritte umfasst: Waschen, Zerkleinerung, Extraktion und gegebenenfalls Konzentration.

5. Verwendung gemäß Anspruch 4, **dadurch gekennzeichnet, dass** die Algen, die es erlauben, die vorgenannten, an Adeninderivaten angereicherten Extrakte zu erhalten, aus *Halydris siliquosa*, *Ascophyllum nodosum, Fucus vesiculosus, Fucus serratus* und vorzugsweise *Halydris siliquosa* ausgewählt sind.

6. Verwendung gemäß einem der Ansprüche 1 bis 5, **dadurch gekennzeichnet, dass** die vorgenannte Zusammensetzung eine Menge von Aminopurinderivaten oder an solchen Derivaten angereicherten Algenextrakten enthält, die den Erhalt einer Aktivität zwischen 500 und 5000, ausgedrückt in Mikrogrammequivalenten BAP (6-Benzylaminopurin) für 100 g Trockenextrakt, gemessen nach dem Amaranth-Test, erlaubt.

7. Verwendung gemäß einem der Ansprüche 1 bis 6, **dadurch gekennzeichnet, dass** die vorgenannte Calciumquelle aus der Korallenalge der Gattung *Lithothamnium,* Kreiden, Muschelsand (trez), Mergel, Dolomit, Kalken, Schäumen der Zuckerindustrie, Kalkschlämmen von Bohrwassern, Thomasschlacken, natürlichen Phosphaten, Calciumcyanamid, Calciumchlorid und Calciumsalzen von Aminosäuren ausgewählt ist.

8. Verwendung gemäß Anspruch 7, **dadurch gekennzeichnet, dass** die vorgenannte Calciumquelle aus pulverförmigem *Lithothamnium* besteht, das insbesondere durch Trocknung und Zerkleinerung erhalten wird.

9. Verwendung gemäß einem der vorhergehenden Ansprüche zur Behandlung von Pflanzen, **dadurch gekennzeichnet, dass** die Menge von Aminopurinderivaten oder an solchen Derivaten reichen Algenextrakten, die auf die Pflanzen angewendet wird, vorzugsweise 0,5 bis 500 Milligrammequivalent BAP pro Hektar und vorzugsweise 1 Milligrammequivalent bis 10 Milligrammequivalent pro Hektar ist.

10. Verwendung auf hexogenem Wege einer Zusammensetzung, bestehend aus mindestens einem natürlichen oder synthetischen Aminopurinderivat oder einem an solchen Derivaten reichen Algenenderivat und einer Calciumquelle als Mittel zum Stimulieren des Prozesses der Keimbildung und der Bereitstellung der pflanzlichen Produktionsstrukturen.
